# EUROPÄISCHE PATENTSCHRIFT

(11) **EP 3 826 814 B1**
(45) Veröffentlichungstag und Bekanntmachung des Hinweises auf die Patenterteilung: **02.11.2022**
(21) Anmeldenummer: 19759490.6
(22) Anmeldetag: 25.07.2019
(51) Int. Cl.: B27B 5/065, B27B 5/18, B23D 45/06, B23D 59/00, B23D 47/00, B23D 47/02, B23D 47/04, B23D 59/02, B27B 27/04, B27B 31/00, B27G 19/02

(54) **PLATTENSÄGE**
PANEL SAW
SCIE À PANNEAUX

(30) Priorität: 26.07.2018 AT 506522018
(43) Veröffentlichungstag der Anmeldung: 02.06.2021
(73) Patentinhaber: Fill Gesellschaft m.b.H., 4942 Gurten (AT)
(72) Erfinder: BISCHOFBERGER, Christian, 6866 Andelsbuch (AT); SUTTERLÜTY, Andreas, 6863 Egg (AT)
(74) Vertreter: Burger, Hannes
(86) Internationale Anmeldenummer: PCT/AT2019/060243
(87) Internationale Veröffentlichungsnummer: WO 2020/019010

(56) Entgegenhaltungen:
- EP-A1- 2 711 116
- EP-A1- 2 832 507
- WO-A1-2014/106868
- DE-A1- 3 004 966
- JP-A- H03 128 204

## Beschreibung

Die Erfindung betrifft eine Plattensäge zum Trennen von Werkstücken in mehrere Abschnitte nach dem Oberbegriff des Anspruchs 1 und ein Verfahren zum Betreiben einer solchen Plattensäge.

Eine solche Plattensäge ist der WO2014106868 zu entnehmen.

Die aus dem Stand der Technik bekannten Plattensägen weisen diverse Nachteile auf. Aufgabe der vorliegenden Erfindung war es, die Nachteile des Standes der Technik zu überwinden und eine Vorrichtung und ein Verfahren zur Verfügung zu stellen, mittels derer ein verbesserter Sägevorgang durchgeführt werden kann.

Diese Aufgabe wird durch eine Vorrichtung und ein Verfahren gemäß den unabhängigen Ansprüchen gelöst.

Vorteilhafte Weiterbildungen sind den abhängigen Ansprüchen zu entnehmen.

Erfindungsgemäß ist eine Plattensäge zum Trennen von plattenförmigen Werkstücken in mehrere Abschnitte vorgesehen. Die Plattensäge umfasst:
- ein Maschinengrundgestell;
- eine Werkstückauflage mit einem Sägeschlitz;
- ein Sägeaggregat welches unterhalb der Werkstückauflage angeordnet ist, wobei am Sägeaggregat ein Kreissägeblatt angeordnet ist, welches in einer Sägestellung durch den Sägeschlitz hindurchragt und in Sägerichtung verschiebbar ist;
- eine Niederhaltevorrichtung zum Klemmen des Werkstückes an der Werkstückauflage;
- eine Positioniervorrichtung zum Positionieren des Werkstückes. Die Niederhaltevorrichtung weist zumindest einen ersten Niederhaltebalken mit einer ersten Niederhaltefläche und einen zweiten Niederhaltebalken mit einer zweite Niederhaltefläche auf, wobei im ersten Niederhaltebalken Druckstifte angeordnet sind, welche relativ zur ersten Niederhaltefläche verschiebbar sind. Die Druckstifte sind in Bohrungen der ersten Niederhaltefläche angeordnet und sind mittels eines Federelements in ihre Rückzugsposition vorgespannt. Die Druckstifte sind mittels Druckluft aus ihrer Rückzugsposition in eine Vorschubposition verschiebbar.

Weiters kann es zweckmäßig sein, wenn das Sägeaggregat eine Schwinge aufweist, welche um eine Schwenkachse schwenkbar an einem Sägeaggregatsrahmen gelagert ist, und dass das Kreissägeblatt in einem Abstand A zur Schwenkachse um eine Drehachse drehbar an der Schwinge gelagert ist, wobei die Schwinge zumindest abschnittsweise zwischen einer ersten Klemmfläche und einer zweiten Klemmfläche angeordnet ist, welche mit dem Sägeaggregatsrahmen gekoppelt sind und in Achsrichtung der Schwenkachse zueinander beabstandet sind und an der Schwinge eine erste Gegenklemmfläche ausgebildet ist, welche der ersten Klemmfläche zugewandt ist und eine zweite Gegenklemmfläche ausgebildet ist, welche der zweiten Klemmfläche zugewandt ist, wobei in einer Schwenkstellung die erste Klemmfläche und die erste Gegenklemmfläche, sowie die zweite Klemmfläche und die zweite Gegenklemmfläche zueinander beabstandet sind und in einer Fixierstellung die erste Klemmfläche und die erste Gegenklemmfläche, sowie die zweite Klemmfläche und die zweite Gegenklemmfläche aneinander anliegen. Durch diese Maßnahme kann die Schwinge des Sägeaggregates in der Schwenkstellung einfach verschwenkt werden, um die Höhe des Sägeschnittes bzw. einen Überstand des Kreissägeblattes einstellen zu können. Gleichzeitig kann die Schwinge in der Fixierstellung derart geklemmt werden, dass das Kreissägeblatt eine genaue Positionierung aufweist und darüber hinaus während des Schnittes nur geringe Vibrationen auftreten. Natürlich können auch mehrere erste Gegenklemmflächen und zweite Gegenklemmflächen ausgebildet sein.

Ferner kann vorgesehen sein, dass die erste Klemmfläche relativ zum Sägeaggregatsrahmen gesehen ortsfest ausgebildet ist und dass die erste Gegenklemmfläche relativ zur Schwinge gesehen ortsfest ausgebildet ist und dass die Schwinge flexibel ausgebildet ist, sodass die erste Gegenklemmfläche in Richtung zur ersten Klemmfläche bewegbar ist und in der Fixierstellung an diese andrückbar ist. Insbesondere kann hierbei vorgesehen sein, dass die Schwinge in der Schwenkstellung eine leichte Krümmung aufweist. Diese Krümmung kann beispielsweise durch die Spannung eines Zugmittels, wie etwa eines Riemens oder einer Kette eingeleitet werden, welcher an einem mit dem Kreissägeblatt gekoppelten Antriebsritzel aufgelegt ist. In der Fixierstellung kann die Krümmung der Schwinge durch die Klemmung zwischen den beiden Klemmflächen ausgeglichen werden und das Kreissägeblatt exakt positioniert werden.

Darüber hinaus kann vorgesehen sein, dass die zweite Klemmfläche relativ zum Sägeaggregatsrahmen gesehen ortsfest ausgebildet ist und dass die zweite Gegenklemmfläche relativ zur Schwinge gesehen verschiebbar ausgebildet ist, sodass die Schwinge von der Schwenkstellung in die Fixierstellung überführbar ist.

Gemäß dem Oberbegriff des Anspruchs 1 ist vorgesehen, dass die Niederhaltevorrichtung zumindest einen ersten Niederhaltebalken mit einer ersten Niederhaltefläche aufweist, wobei im ersten Niederhaltebalken Druckstifte angeordnet sind, welche relativ zur ersten Niederhaltefläche verschiebbar sind. Durch diese Maßnahme kann erreicht werden, dass die Klemmvorrichtung möglichst weit zum Sägeschlitz verschoben werden kann, um ein möglichst kurzes Stück des Werkstückes abschneiden zu können bzw. einen Kratzschnitt durchführen zu können.

Insbesondere kann vorgesehen sein, dass die Niederhaltebalken in einzelne Bereiche unterteilt sind, wobei die Druckstifte in den einzelnen Bereichen unabhängig voneinander ausgefahren werden können. Weiters ist es auch möglich, dass in den einzelnen Bereichen unterschiedliche Drücke auf die Druckstifte aufgebracht werden.

Erfindungsgemäß ist vorgesehen, dass die Druckstifte in Bohrungen der ersten Niederhaltefläche angeordnet sind und mittels eines Federelements in ihre Rückzugsposition vorgespannt sind und dass die Druckstifte mittels Druckluft aus ihrer Rückzugsposition in eine Vorschubposition verschiebbar sind. Insbesondere kann vorgesehen sein, dass der Druck der Druckluft und somit die Anpresskraft variabel einstellbar sind.

Ferner kann es zweckmäßig sein, wenn der erste Niederhaltebalken an einer ersten Seite des Sägeschlitzes angeordnet ist und der zweite Niederhaltebalken an einer zweiten Seite des Sägeschlitzes angeordnet ist, wobei die beiden Niederhaltebalken sowohl zusammen als auch unabhängig voneinander in Vertikalrichtung verschiebbar sind. Durch diese Maßnahme kann das Werkstück an der ersten Seite des Sägeschlitzes oder nur an der zweiten Seite des Sägeschlitzes unabhängig voneinander geklemmt werden.

Insbesondere kann vorgesehen sein, dass der erste Niederhaltebalken mittels eines Elektromotors, insbesondere eines Servomotors, angetrieben wird und dass der zweite Niederhaltebalken mittels eines Aktors, insbesondere eines Pneumatikzylinders, relativ zum ersten Niederhaltebalken verschiebbar am ersten Niederhaltebalken angeordnet ist. Der Aktor kann somit mit dem ersten Niederhaltebalken und dem zweiten Niederhaltebalken gekoppelt sein. Alternativ dazu ist es natürlich auch denkbar, dass der zweite Niederhaltebalken mittels eines Elektromotors, insbesondere eines Servomotors, angetrieben wird und dass der zweite Niederhaltebalken mittels eines Aktors, insbesondere eines Pneumatikzylinders, relativ zum ersten Niederhaltebalken verschiebbar am ersten Niederhaltebalken angeordnet ist.

Darüber hinaus kann vorgesehen sein, dass die Werkstückauflage an einer Auflageplatte ausgebildet ist, welche an einer Auflageplattenaufnahme aufliegt, wobei die Auflageplatte Druckluftdüsen durchragen, wobei die Druckluftdüsen ein Gewinde aufweisen und in der Auflageplattenaufnahme ein Gegengewinde ausgebildet ist und wobei die Auflageplatte mittels der Druckluftdüsen an der Auflageplattenaufnahme fixiert ist. Durch diese Maßnahme kann erreicht werden, dass die Auflageplatte nicht mittels zusätzlicher Verbindungselemente mit der Auflageplattenaufnahme verbunden werden muss. Dadurch kann insbesondere eine Verbesserung der Funktion des Luftkissens erreicht werden.

Weiters kann vorgesehen sein, dass die Auflageplatte Durchgangsbohrungen zur Aufnahme der Druckluftdüsen aufweist und dass in den Durchgangsbohrungen Senkungen ausgebildet sind, wobei die Druckluftdüsen einen Absatz aufweisen, welcher mit den Senkungen korrespondiert, sodass die Druckluftdüsen versenkt in der Auflageplatte aufgenommen sind und mittels des Absatzes der Druckluftdüsen eine Fixierkraft auf die Auflageplatte aufbringbar ist und zusätzlich eine Positionierung der Auflageplatte erreicht werden kann. Durch diese Maßnahme kann eine gute Fixierung der Auflageplatte an der Auflagenplattenaufnahme erreicht werden.

Gemäß einer besonderen Ausprägung ist es möglich, dass eine Ausrichtvorrichtung ausgebildet ist, welche zum Ausrichten bzw. Positionieren des Werkstückes dient und optional gleichzeitig zur Eingriffssicherung in das Kreissägeblatt dient, wobei die Ausrichtvorrichtung in Sägerichtung verschiebbar ist. Durch diese Maßnahme kann eine Erhöhung der Personensicherheit erreicht werden.

Entsprechend einer vorteilhaften Weiterbildung kann vorgesehen sein, dass die Ausrichtvorrichtung in Sägerichtung teleskopierbar ist. Durch diese Maßnahme kann erreicht werden, dass die Ausrichtvorrichtung einen möglichst großen Abdeckbereich aufweist und gleichzeitig in ihrer Ruheposition einen möglichst geringen Platzbedarf aufweist.

Insbesondere kann es vorteilhaft sein, wenn in der Ausrichtvorrichtung eine Absaugung angeordnet ist. Durch diese Maßnahme kann erreicht werden, dass die Späne möglichst gut abgesaugt werden können. Dies ist insbesondere beim Durchführen von Kratzschnitten vorteilhaft.

Ferner kann vorgesehen sein, dass an einer Stirnseite der Ausrichtvorrichtung ein Anschlag angeordnet ist. Der Anschlag kann dazu genutzt werden, um das Werkstück an der Plattensäge auszurichten.

Darüber hinaus kann vorgesehen sein, dass die Ausrichtvorrichtung geteilt ist und an der ersten Seite des Sägeschlitzes ein erster Ausrichtvorrichtungsteil angeordnet ist und an der zweiten Seite des Sägeschlitzes ein zweiter Ausrichtvorrichtungsteil angeordnet ist. Insbesondere ist es hierbei vorteilhaft, wenn die beiden Ausrichtvorrichtungsteile einzeln und unabhängig voneinander verschiebbar sind. Weiters kann vorgesehen sein, dass zumindest der erste Ausrichtvorrichtungsteil gleichzeitig als Schutzhaube ausgeführt ist. Durch diese Maßnahme kann beim Durchführen von Kratzschnitten einer der beiden Ausrichtvorrichtungsteile am Werkstück vorbeigeführt werden und synchron mit dem Sägeaggregat bewegt werden. Durch diese Maßnahme kann die Maschinensicherheit der Plattensäge erhöht werden, da erreicht werden kann, dass zumindest einer der beiden Ausrichtvorrichtungsteile vor dem Kreissägeblatt geführt werden kann. Gleichzeitig kann das zweite Ausrichtvorrichtungsteil zum Ausrichten des Werkstücks dienen. Natürlich kann auch der zweite Ausrichtvorrichtungsteil als Schutzhaube ausgebildet sein. Dies ist jedoch nicht zwingend erforderlich, da die zweite Seite des Sägeschlitzes dem Benutzer normalerweise nicht zugänglich ist.

Vorteilhaft ist auch eine Ausprägung, gemäß welcher vorgesehen sein kann, dass eine Kreissägeblattschmiervorrichtung ausgebildet ist, welche einen Düsenhalter aufweist, der einen Schlitz zur Aufnahme des Kreissägeblattes aufweist, wobei in einer ersten Seitenwand des Schlitzes eine erste Schmiermitteldüse angeordnet ist und in einer zweiten Seitenwand des Schlitzes eine zweite Schmiermitteldüse angeordnet ist. Durch die Kreissägeblattschmiervorrichtung kann eine Schmierung und Kühlung des Kreissägeblattes erreicht werden. Durch die beschriebene Ausgestaltung der Kreissägeblattschmiervorrichtung können die Verwirbelungen im Bereich der Schmiermitteldüse möglichst gering gehalten werden, wodurch ein exaktes Auftragen des Schmiermittels auf das Kreissägeblatt ermöglicht wird.

Gemäß einer Weiterbildung ist es möglich, dass die erste Schmiermitteldüse und die zweite Schmiermitteldüse in einem Winkel zwischen 15° und 85° zur jeweils zugewandten Sägeblattoberfläche angeordnet sind. Durch diese Maßnahme kann ein möglichst großer Bereich des Kreissägeblattes mit Schmiermittel beaufschlagt werden.

Weiters kann vorgesehen sein, dass die Schmiermitteldüsen in einer Seitenansicht auf das Kreissägeblatt gesehen, in einem Winkel zwischen 5° und 80°, insbesondere zwischen 10° und 45° aus der Vertikalen nach unten geneigt sind. Die Düsen können in einer fixen Höhe zur Werkstückauflage angeordnet sein.

Weiters kann vorgesehen sein, dass die Schmiermitteldüsen in Horizontalrichtung verschiebbar sind. Dadurch können sie an verschiedene Kreissägeblattdurchmesser angepasst werden.

Weiters kann vorgesehen sein, dass die Düsen einzeln und unabhängig voneinander schaltbar sind. Insbesondere kann hierbei vorgesehen sein, dass nur eine der Düsen oder mehrere Düsen gleichzeitig mit Schmiermittel beaufschlagt werden. Dadurch kann die Schmierung an die Erfordernisse des jeweiligen Werkstückes angepasst werden, um eine möglichst geringe Menge an Schmiermittel zu verbrauchen und dabei eine möglichst gute Schmierung zu erreichen.

Ferner kann es zweckmäßig sein, wenn an einer Rückwand des Schlitzes eine dritte Schmiermitteldüse angeordnet ist, welche auf eine Umfangsfläche des Kreissägeblattes gerichtet ist. Dies bringt eine überraschend gute Schmierung mit sich.

Darüber hinaus kann vorgesehen sein, dass die Positioniervorrichtung zumindest eine Klemmvorrichtung umfasst, wobei die Klemmvorrichtung einen Klemmvorrichtungsrahmen, zumindest einen unteren Klemmfinger, einen oberen Klemmfinger und einen Hebel, an welchem der obere Klemmfinger angeordnet ist, umfasst, wobei der Hebel bezüglich einer ersten Schwenkachse schwenkbar am Klemmvorrichtungsrahmen gelagert ist und wobei zwischen der ersten Schwenkachse und dem oberen Klemmfinger ein Zug-/Druckmittel bezüglich einer zweiten Schwenkachse schwenkbar mit dem Hebel gekoppelt ist, wobei das Zug-/Druckmittel derart mit einem Aktor, insbesondere einem Zylinder, gekoppelt ist, dass beim Ausfahren des Aktors der obere Klemmfinger zum unteren Klemmfinger hin bewegt wird. Besonders bei der Verwendung eines Pneumatikzylinders oder Hydraulikzylinders als Aktor ist es vorteilhaft, dass beim Ausfahren des Aktors der obere Klemmfinger zum unteren Klemmfinger hinbewegt wird und somit die Klemmvorrichtung geschlossen wird, da ein Zylinder beim Ausfahren eine größere Kraft aufbringen kann als beim Einfahren. Somit kann der Zylinder eine kleinere Dimensionierung aufweisen.

Weiters kann vorgesehen sein, dass die Klemmvorrichtung einen zweiten Hebel umfasst, welcher um eine vierte Schwenkachse schwenkbar am Klemmvorrichtungsrahmen gelagert ist, wobei der zweite Hebel an einem ersten Längsende mit dem Aktor gekoppelt ist und an einem zweiten Längsende mit dem Zug-/Druckmittel gekoppelt ist und wobei die vierte Schwenkachse zwischen dem ersten Längsende und dem zweiten Längsende angeordnet ist, insbesondere dass das Zug-/Druckmittel derart mit dem zweiten Hebel gekoppelt ist, dass beim Ausfahren des Aktors das Zug-/Druckmittel auf Zug belastet wird.

Gemäß einer besonderen Ausprägung ist es möglich, dass ein Erfassungsmittel ausgebildet ist, welches zum Erfassen der Position des Werkstückes in der Klemmvorrichtung dient. Durch diese Maßnahme kann überwacht werden, ob das Werkstück richtig in der Klemmvorrichtung aufgenommen ist und somit eine exakte Positionierung des Werkstückes mittels der Klemmvorrichtung ermöglicht wird. Insbesondere kann hierbei überwacht werden, ob das Werkstück auf Anschlag in der Klemmvorrichtung aufgenommen ist.

Entsprechend einer vorteilhaften Weiterbildung kann vorgesehen sein, dass die Positioniervorrichtung einen Positionierschlitten umfasst, an welchem mehrere Klemmvorrichtungen angeordnet sind, wobei der Positionierschlitten an einer ersten Linearführung und an einer zweiten Linearführung verschiebbar am Maschinengrundgestell gelagert ist, wobei im Bereich der ersten Linearführung ein erster Antriebsmotor mit einem ersten Antriebssystem gekoppelt ist und im Bereich der zweiten Linearführung ein zweiter Antriebsmotor mit einem zweiten Antriebssystem gekoppelt ist. Durch die Ausbildung von zwei Antriebsmotoren kann der Positionierschlitten in dessen Bewegung exakt gesteuert werden. Insbesondere ist bei der Verwendung von zwei Antriebsmotoren eine exakte Positionierung des Positionierschlittens möglich. Weiters kann vorgesehen sein, dass im Bereich der ersten Linearführung und/oder der zweiten Linearführung ein Fixierelement vorgesehen sein kann, mittels welchem die eingestellte Position fixiert werden kann.

Insbesondere kann es vorteilhaft sein, wenn im Bereich der ersten Linearführung ein erstes Absolutmesssystem ausgebildet ist, welches zum Liefern einer Lageinformation an den ersten Antriebsmotor dient, und im Bereich der zweiten Linearführung ein zweites Absolutmesssystem ausgebildet ist, welches zum Liefern einer Lageinformation an den zweiten Antriebsmotor dient. Durch die Verwendung des Absolutmesssystems kann eine exakte Positionierung des Positionierschlittens erreicht werden. Insbesondere bei der Verwendung von je einem Absolutmesssystem pro Linearführung kann der Positionierschlitten exakt und parallel verschoben werden.

Ferner kann vorgesehen sein, dass die erste Linearführung und die zweite Linearführung des Positionierschlittens unterhalb des Niveaus der Werkstückauflage angeordnet sind. Durch diese Maßnahmen können die beiden Linearführungen massiv und somit robust ausgeführt werden und beschränken das Werkstück bezüglich dessen Bearbeitbarkeit nicht.

Darüber hinaus kann vorgesehen sein, dass am Sägeaggregat ein Vibrationsdämpfungssystem ausgebildet ist, welches eine Kraftaufbringungsvorrichtung zur berührungslosen Kraftaufbringung auf das Kreissägeblatt aufweist. Durch diese Maßnahme kann ein ruhigerer Lauf des Kreissägeblattes erreicht werden, wodurch die Schnittqualität verbessert werden kann.

Vorteilhaft ist auch eine Ausprägung, gemäß welcher vorgesehen sein kann, dass die Kraftaufbringungsvorrichtung eine Fluiddüse aufweist, mittels welcher ein Druckstoß, insbesondere mittels Druckluft, auf das Kreissägeblatt abgebbar ist, oder dass die Kraftaufbringungsvorrichtung einen Elektromagneten aufweist, mittels welchem ein Magnetkraftimpuls auf das Kreissägeblatt abgebbar ist. Besonders eine Fluiddüse zum Abgeben eines Druckluftstoßes eignet sich gut als Kraftaufbringungsvorrichtung. Alternativ dazu kann auch vorgesehen sein, dass die Fluiddüse mit Dauerdruckluft beaufschlagt wird, um ein Luftkissen aufzubringen. Weiters kann vorgesehen sein, dass im Bereich der Niederhaltevorrichtung eine Lichtleiste, insbesondere eine LED-Leiste angeordnet ist. Insbesondere kann hierbei vorgesehen sein, dass die Lichtleiste an der ersten Seite der Plattensäge angeordnet ist. Die Lichtleiste kann zur optischen Informationsübertragung an den Maschinenbediener dienen. Insbesondere kann sich die Lichtleiste über die gesamte Breite der Plattensäge erstrecken. Weiters kann vorgesehen sein, dass einzelne Leuchtsegmente, welche nebeneinander und optional auch in Reihen übereinander angeordnet sind, selektiv schaltbar sind. Durch diese Maßnahme kann beispielsweise die Schnitttiefe des Kreissägeblattes dadurch angezeigt werden, dass je nach Schnitttiefe verschieden viele der übereinander angeordneten Leuchtsegmente aufleuchten. Die aktuelle Position des Kreissägeblattes kann dadurch angezeigt werden, dass über die Breite gesehen nur jene Leuchtsegmente der Lichtleiste aufleuchten, im Bereich derer sich das Kreissägeblatt befindet. Weiters ist es auch denkbar, dass Mittels der Lichtleiste signalisiert wird, ob sich ein Maschinenbediener innerhalb eines Sicherheitsbereichs befindet, bzw. welche Bereiche für einen aktuellen Verfahrensschritt als Sicherheitsbereiche definiert werden.

Erfindungsgemäß ist ein Verfahren zum Betreiben einer Plattensäge nach dem Anspruch 12 vorgesehen.

Darüber hinaus kann vorgesehen sein, dass zum Trennen eines Anfangsabschnittes des Werkstückes folgende Verfahrensschritte durchgeführt werden:
- Positionieren des Werkstückes mittels der Positioniervorrichtung;
- Verschieben des ersten Ausrichtvorrichtungsteils und des zweiten Ausrichtvorrichtungsteils zum Werkstück, bis der zweite Anschlag des zweiten Ausrichtvorrichtungsteils am Werkstück anliegt;
- Niederfahren des ersten Niederhaltebalkens und des zweiten Niederhaltebalkens bis die erste Niederhaltefläche des ersten Niederhaltebalkens und die zweite Niederhaltefläche des zweiten Niederhaltebalkens am Werkstück anliegt;
- Trennen des Werkstückes mittels des Kreissägeblattes durch Verschieben des Sägeaggregates in Sägerichtung und dabei gleichzeitig verschieben des ersten Ausrichtvorrichtungsteils mit dem Sägeaggregat. Durch diese Maßnahme kann die Maschinensicherheit beim Durchführen eines Kratzschnittes verbessert werden.

Weiters kann vorgesehen sein, dass beim Trennen des Werkstückes mittels des Kreissägeblattes mittels eines Messsystems die Schwingungsamplitude des Kreissägeblattes in Axialrichtung erfasst wird und mittels der Kraftaufbringungsvorrichtung derart Kraftstöße auf das Kreissägeblatt aufgebracht werden, dass der Schwingungsamplitude des Kreissägeblattes entgegengewirkt wird. Durch diese Maßnahme kann die Laufruhe des Kreissägeblattes verbessert werden, um genaue und saubere Schnitte durchführen zu können. Weiters können durch diese Maßnahme dünnere Kreissägeblätter eingesetzt werden.

Ferner kann vorgesehen sein, dass beim Positionieren des Werkstückes mittels der Positioniervorrichtung der erste Antriebsmotor und der zweite Antriebsmotor synchron betrieben werden, wobei als Regelgröße der Erfassungswert des ersten Absolutmesssystems und des zweiten Absolutmesssystems in die Steuerung einfließt. Durch diese Maßnahme kann eine exakte Positionierung des Werkstückes erreicht werden.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer Plattensäge;
- Fig. 2: eine Seitenansicht eines Sägeaggregates der Plattensäge;
- Fig. 3: eine Draufsicht des Sägeaggregates der Plattensäge;
- Fig. 4: eine Schnittansicht der Verschraubung einer Druckluftdüse;
- Fig. 5: eine perspektivische Ansicht eines Druckbalkens;
- Fig. 6: ein erster Verfahrensschritt zum Klemmen eines Werkstückes;
- Fig. 7: ein zweiter Verfahrensschritt zum Klemmen eines Werkstückes;
- Fig. 8: ein dritter Verfahrensschritt zum Klemmen eines Werkstückes;
- Fig. 9: ein vierter Verfahrensschritt zum Klemmen eines Werkstückes;
- Fig. 10: ein fünfter Verfahrensschritt zum Klemmen eines Werkstückes;
- Fig. 11: ein sechster Verfahrensschritt zum Klemmen eines Werkstückes;
- Fig. 12: eine perspektivische Ansicht einer Klemmvorrichtung;
- Fig. 13: eine Schnittansicht einer Kreissägeblattschmiervorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

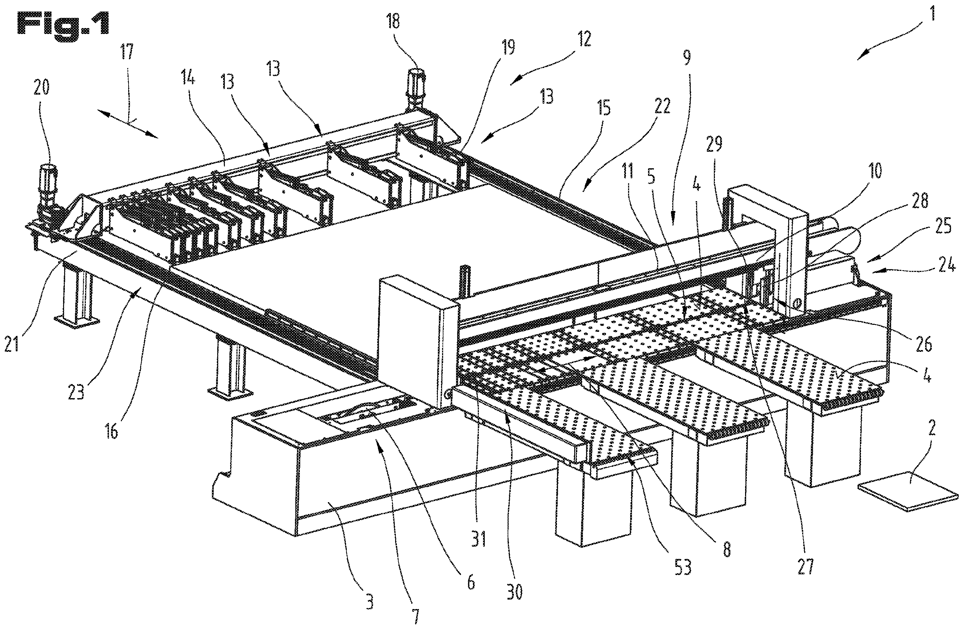

Fig.1 zeigt eine perspektivische Darstellung einer Plattensäge 1 zum Trennen von plattenförmigen Werkstücken 2. Mittels der Plattensäge 1 können die plattenförmigen Werkstücke 2 in mehrere Abschnitte geteilt werden bzw. können sie auf eine vorbestimmte Größe geschnitten werden.

Die Plattensäge 1 umfasst ein Maschinengrundgestell 3 auf welchem die einzelnen Bauteile aufgebaut sind.

Weiters ist eine Werkstückauflage 4 ausgebildet, auf welche das Werkstück 2 aufgelegt werden kann. Im Bereich der Werkstückauflage 4 ist ein Sägeschlitz 5 vorgesehen, durch welchen ein Kreissägeblatt 6 eines Sägeaggregates 7 hindurchragen kann, um das Werkstück 2 zu schneiden. Das Sägeaggregat 7 ist in Sägerichtung 8 verschiebbar, um das Werkstück 2 auf einer großen Breite der Plattensäge 1 schneiden zu können.

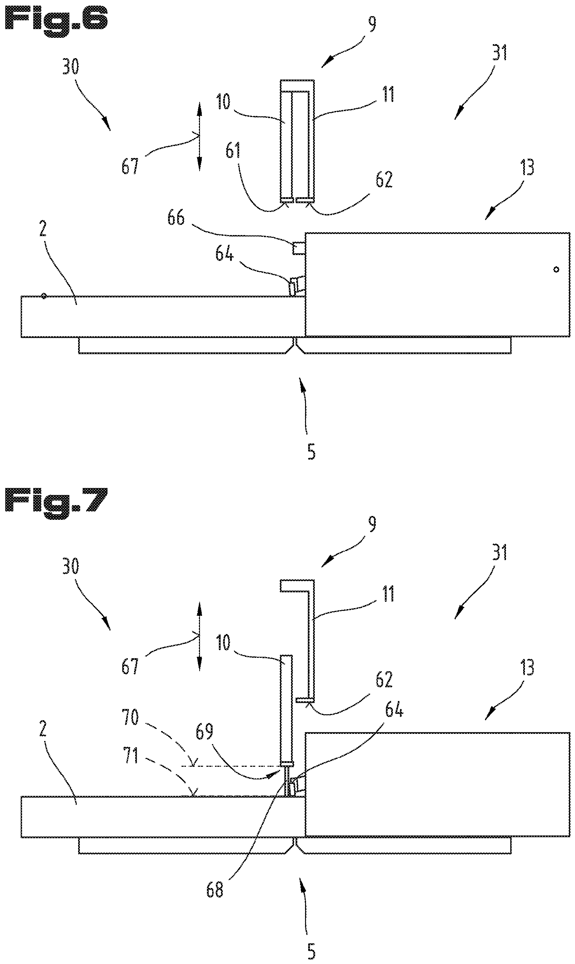

Weiters ist eine Niederhaltevorrichtung 9 vorgesehen, welche zum Klemmen des Werkstückes 2 an der Werkstückauflage 4 dient. Mittels der Niederhaltevorrichtung 9 kann das Werkstück 2 zum Schneiden geklemmt werden, um eine saubere positionsgenaue Schnittführung zu erreichen. Die Niederhaltevorrichtung 9 umfasst einen ersten Niederhaltebalken 10 und einen zweiten Niederhaltebalken 11. Der Aufbau der Niederhaltebalken 10, 11 wird in weiterer Folge in den Figuren 6 und 7 noch genauer beschrieben.

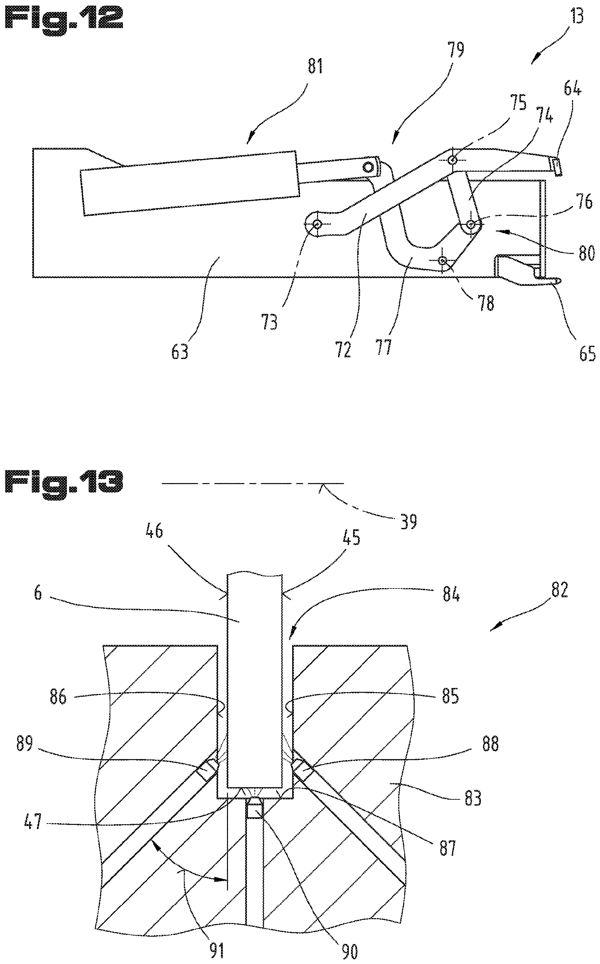

Weiters umfasst die Plattensäge 1 eine Positioniervorrichtung 12, welche zum Positionieren der Werkstücke 2 dient. Die Positioniervorrichtung 12 umfasst mehrere Klemmvorrichtungen 13, welche an einem Positionierschlitten 14 angeordnet sind. Die Klemmvorrichtungen 13 werden in weiterer Folge in Fig. 12 noch näher beschrieben.

Wie aus Fig. 1 ersichtlich, kann vorgesehen sein, dass die Klemmvorrichtungen 13 in einem unregelmäßigen Abstand am Positionierschlitten 14 angeordnet sind. Insbesondere kann vorgesehen sein, dass an einer Anschlagseite der Plattensäge 1, in einem engeren Abstand zueinander angeordnet sind. Dadurch kann erreicht werden, dass auch kleine Werkstücke 2 gut mittels den Klemmvorrichtungen 13 geklemmt werden können. Weiters kann vorgesehen sein, dass die Klemmvorrichtungen 13 in Sägerichtung 8 verschiebbar am Positionierschlitten 14 angeordnet sind, um diese je nach Beschaffenheit des Werkstückes 2 positionieren zu können.

Wie aus Fig. 1 weiters ersichtlich, weist die Positioniervorrichtung 12 eine erste Linearführung 15 und eine zweite Linearführung 16 auf, mittels welcher der Positionierschlitten 14 in Positionierrichtung 17 verschiebbar ist.

Weiters ist im Bereich der ersten Linearführung 15 ein erster Antriebsmotor 18 vorgesehen, welcher mit einem ersten Antriebssystem 19 gekoppelt ist und zum Verschieben des Positionierschlittens 14 in Positionierrichtung 17 dient. Analog dazu ist im Bereich der zweiten Linearführung 16 ein zweiter Antriebsmotor 20 ausgebildet, welcher mit einem zweiten Antriebssystem 21 gekoppelt ist und ebenfalls zum Verschieben des Positionierschlittens 14 in Positionierrichtung 17 dient.

Das erste Antriebssystem 19 bzw. das zweite Antriebssystem 21 können unterschiedlichste Antriebsmechanismen aufweisen. Beispielsweise ist es möglich, dass die Antriebssysteme 19, 21 mittels eines Zahnstangenantriebes, eines Zahnriemenantriebes, einer Antriebsspindel, wie etwa einer Kugelumlaufspindel, oder einem sonstigen aus dem Stand der Technik bekannten Kraftübertragungsmittel realisiert werden.

Die beiden Antriebsmotoren 18, 20 sind vorzugsweise in Form von Servomotoren ausgebildet, welche synchron zueinander betrieben werden. Die beiden Antriebsmotoren 18, 20 können hierbei von einer zentralen Maschinensteuerung angesteuert werden.

Alternativ dazu kann vorgesehen sein, dass die beiden Antriebsmotoren 18, 20 in Form von Linearantrieben ausgebildet sind.

Weiters ist ein erstes Absolutmesssystem 22 vorgesehen, welches zum Erfassen der Position des Positionierschlittens 14 im Bereich der ersten Linearführung 15 dient. Analog dazu ist ein zweites Absolutmesssystem 23 vorgesehen, welches zur Erfassung der Absolutposition des Positionierschlittens 14 im Bereich der zweiten Linearführung 16 dient. Insbesondere ist vorgesehen, dass die beiden Absolutmesssysteme 22, 23 als Eingangsgröße in der Maschinensteuerung herangezogen werden, um mittels der Antriebsmotoren 18, 20 die exakte Position des Positionierschlittens 14 vorzugeben.

Wie aus Fig.1 weiters ersichtlich, ist eine Ausrichtvorrichtung 24 ausgebildet, welche während dem Betrieb der Plattensäge 1 das Kreissägeblatt 6 abdecken kann, sodass der Maschinenbediener nicht in dieses eingreifen kann. Insbesondere kann vorgesehen sein, dass in der Ausrichtvorrichtung 24 eine Absaugung 25 ausgebildet ist, welche zum Absaugen der Späne dient.

Weiters kann vorgesehen sein, dass die Ausrichtvorrichtung 24 einen ersten Ausrichtvorrichtungsteil 26 aufweist, welcher an einer ersten Seite 30 des Sägeschlitzes 5 angeordnet ist. Außerdem kann die Ausrichtvorrichtung 24 einen zweiten Ausrichtvorrichtungsteil 27 aufweisen, welcher an einer zweiten Seite 31 des Sägeschlitzes 5 angeordnet ist. Der erste Ausrichtvorrichtungsteil 26 und der zweite Ausrichtvorrichtungsteil 27 können gemeinsam die Ausrichtvorrichtung 24 ausbilden. Insbesondere kann vorgesehen sein, dass der erste Ausrichtvorrichtungsteil 26 einen ersten Anschlag 28 aufweist und dass der zweite Ausrichtvorrichtungsteil 27 einen zweiten Anschlag 29 aufweist.

Die Ausrichtvorrichtungsteile 26, 27 sind in Sägerichtung 8 verschiebbar und werden nach dem Positionieren des Werkstückes 2 derart in Sägerichtung 8 verschoben, dass zumindest einer der beiden Anschläge 28, 29 im Werkstück 2 zum Anliegen kommt.

Wenn beide aus dem Werkstück 2 herausgeschnittenen Teile eine große Ausdehnung in Positionierrichtung 17 aufweisen, dann kommen sowohl der erste Anschlag 28 als auch der zweite Anschlag 29 am Werkstück 2 zum Anliegen.

Wenn jedoch ein sogenannter Kratzschnitt durchgeführt wird, bei dem nur eine plane Stirnfläche am Werkstück 2 hergestellt wird und somit in etwa nur ein Sägeblattbreiter Streifen vom Werkstück 2 abgetragen wird, so kommt nur einer der beiden Anschläge 28, 29, nämlich der erste Anschlag 28 oder der zweite Anschlag 29 am Werkstück 2 zum Anliegen. Wenn beispielsweise an einer Vorderseite des Werkstückes 2 ein Kratzschnitt durchgeführt wird, wird das Werkstück 2 vorzugsweise mittels des zweiten Anschlages 29 geklemmt. Der erste Ausrichtvorrichtungsteil 26 liegt hierbei außerhalb des Bereichs des Werkstückes 2 und kann somit vor das Werkstück 2 verschoben werden. Insbesondere ist hierbei vorgesehen, dass der erste Ausrichtvorrichtungsteil 26 vor das Kreissägeblatt 6 verschoben wird und beim Schneiden des Werkstückes 2 gleichzeitig mit dem Kreissägeblatt 6 in Sägerichtung 8 verschoben wird, sodass der erste Ausrichtvorrichtungsteil 26 während dem gesamten Sägeschnitt vor dem Kreissägeblatt 6 positioniert ist und somit dem Maschinenbediener vor dem Kreissägeblatt 6 schützt.

Insbesondere kann vorgesehen sein, dass zumindest der erste Ausrichtvorrichtungsteil 26 in Sägerichtung 8 teleskopierbar ist, sodass in einer Ruheposition der Ausrichtvorrichtungsteile 26, 27, wie sie in Fig. 1 dargestellt ist, der erste Ausrichtvorrichtungsteil 26 eine möglichst kurze Erstreckung in Sägerichtung 8 aufweist, um möglichst wenig Platz zu verbrauchen. Wenn der erste Ausrichtvorrichtungsteil 26 jedoch aus seiner Ruheposition herausbewegt wird, so kann sich mittels der Teleskopierbarkeit die Erstreckung des ersten Ausrichtvorrichtungsteils 26 in Sägerichtung 8 vergrößern, sodass das Kreissägeblatt 6 möglichst gut abgedeckt werden kann. Insbesondere kann vorgesehen sein, dass der erste Ausrichtvorrichtungsteil 26 zwei Segmente aufweist, welche hintereinander verschiebbar sind. Die beiden Segmente können mittels eines Federelementes, wie etwa einer Gasdruckfeder in deren maximaler Erstreckung auseinander gedrückt werden. Beim Verschieben des ersten Ausrichtvorrichtungsteils 26 in die Ruheposition kann das hintere Segment an einem Anschlag anliegen, wodurch die Erstreckung des ersten Ausrichtvorrichtungsteils 26 in Sägerichtung 8 verkürzt wird.

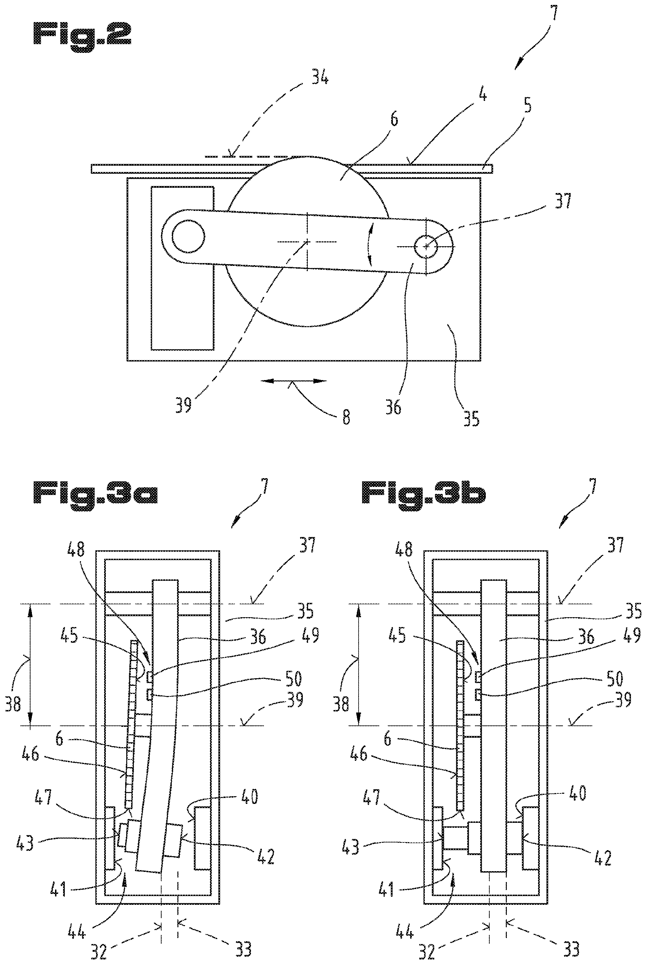

In der Fig. 2 ist das Sägeaggregat 7 in einer Seitenansicht dargestellt und in den Fig. 3a und 3b ist das Sägeaggregat 7 in einer Draufsicht dargestellt, wobei das Sägeaggregat 7 in der Fig. 3a in einer Schwenkstellung 32 dargestellt ist und in der Fig. 3b in der Fixierstellung 33 dargestellt ist. Die Proportionen in den Figuren Fig. 3a und 3b sind hierbei übertrieben dargestellt.

Wie aus den Fig. 2 und 3 ersichtlich, weist das Sägeaggregat 7 einen Sägeaggregatsrahmen 35 auf, an welchem eine Schwinge 36 um eine Schwenkachse 37 schwenkbar gelagert ist. An der Schwinge 36 ist das Kreissägeblatt 6 angeordnet. Durch das Schwenken der Schwinge 36 kann das Kreissägeblatt 6 in eine Sägestellung 34 verschwenkt werden, in welcher es durch den Sägeschlitz 5 über die Werkstückauflage 4 hinausragt und somit zum Sägen des Werkstückes 2 dient. Mittels der Schwinge 36 kann das Kreissägeblatt 6 nach unten verschwenkt werden, sodass es unterhalb der Werkstückauflage 4 angeordnet ist und somit unterhalb des Werkstückes 2 in Sägerichtung 8 verschoben werden kann.

Das Kreissägeblatt 6 ist um eine Drehachse 39 drehbar an der Schwinge gelagert, wobei die Drehachse 39 in einem Abstand A 38 zur Schwenkachse 37 angeordnet ist.

Wie aus Fig. 3 weiters ersichtlich, kann vorgesehen sein, dass die Schwinge 36 an einem zur Schwenkachse 37 gegenüberliegenden Längsende zwischen einer ersten Klemmfläche 40 und einer zweiten Klemmfläche 41 angeordnet ist. Die Klemmflächen 40, 41 sind mit dem Sägeaggregatsrahmen 35 gekoppelt. In einem ersten Ausführungsbeispiel kann vorgesehen sein, dass die Klemmflächen 40, 41 direkt am Sägeaggregatsrahmen 35 ausgebildet sind. In einem weiteren in Fig. 3 dargestellten Ausführungsbeispiel kann auch vorgesehen sein, dass die Klemmflächen 40, 41 jeweils an Auflagepads ausgebildet sind, welche mit dem Sägeaggregatsrahmen 35 gekoppelt sind.

Weiters kann vorgesehen sein, dass an der Schwinge 36 eine erste Gegenklemmfläche 42 ausgebildet ist, welche der ersten Klemmfläche 40 zugewandt ist und eine zweite Gegenklemmfläche 43 ausgebildet ist, welche der zweiten Klemmfläche 41 zugewandt ist.

Wie aus Fig. 3a ersichtlich, kann in der Schwenkstellung 32 die erste Gegenklemmfläche 42 von der ersten Klemmfläche 40 beabstandet sein und die zweite Gegenklemmfläche 43 von der zweiten Klemmfläche 41 beabstandet sein. Somit kann die Schwinge 36 frei um die Schwenkachse 37 verschwenkt werden. Hierbei kann vorgesehen sein, dass die Schwinge 36 in Draufsicht gesehen eine leichte Krümmung aufweist, welche in Fig. 3a der Übersichtlichkeit halber übertrieben dargestellt ist. Zum Überführen der Schwinge 36 von der Schwenkstellung 32 in die Fixierstellung 33 kann vorgesehen sein, dass die zweite Gegenklemmfläche 43 mittels eines Stellmittels 44 relativ zur Schwinge 36 verschiebbar ist. Mittels dem Stellmittel 44, welches zwischen der Schwinge 36 und der zweiten Gegenklemmfläche 43 wirkt, kann die zweite Gegenklemmfläche 43 an die zweite Klemmfläche 41 angepresst werden. Sobald die zweite Gegenklemmfläche 43 an der zweiten Klemmfläche 41 anliegt, wird die Schwinge 36 in Richtung erster Klemmfläche 40 verschoben oder elastisch verformt bis die erste Gegenklemmfläche 42 ebenfalls an der ersten Klemmfläche 40 anliegt. Die Schwinge 36 ist somit zwischen der ersten Klemmfläche 40 und der zweiten Klemmfläche 41 geklemmt und in ihre Fixierstellung 33 verschoben. Insbesondere kann vorgesehen sein, dass durch diese Maßnahme die Schwinge 36 derart verformt wird, dass die zuvor erwähnte Krümmung aus der Schwinge 36 herausgedrückt wird.

Wie aus Fig. 3 ersichtlich, weist das Kreissägeblatt 6 eine erste Sägeblattoberfläche 45, eine zweite Sägeblattoberfläche 46 und eine Umfangsfläche 47 auf. Die erste Sägeblattoberfläche 45 und die zweite Sägeblattoberfläche 46 sind hierbei einander gegenüberliegend angeordnet.

Weiters kann ein Vibrationsdämpfungssystem 48 ausgebildet sein, welches zum Dämpfen von axialen Schwingungen des Kreissägeblattes 6 dient. Das Vibrationsdämpfungssystem 48 kann eine Kraftaufbringungsvorrichtung 49 umfassen, welche zum Aufbringen einer in Axialrichtung wirkenden Kraft auf das Kreissägeblatt 6 dient.

Die Kraftaufbringungsvorrichtung 49 kann beispielsweise in Form einer Druckluftdüse ausgebildet sein, welche einen Druckluftstoß auf das Kreissägeblatt 6 abgeben kann.

Alternativ dazu kann vorgesehen sein, dass die Kraftaufbringungsvorrichtung 49 beispielsweise als Elektromagnet ausgebildet ist, welcher zum Aufbringen einer Magnetkraft bzw. eines Magnetkraftimpulses auf das Kreissägeblatt 6 dient. Die Kraftaufbringungsvorrichtung 49 kann, wie in Fig. 3 dargestellt, an einer Seite des Kreissägeblattes 6 angeordnet sein. Alternativ dazu kann die Kraftaufbringungsvorrichtung 49 auch an beiden Seiten des Kreissägeblattes 6 angeordnet sein.

Das Vibrationsdämpfungssystem 48 kann darüber hinaus ein Messsystem 50 umfassen, welches zum Erfassen der axialen Schwingungsamplitude des Kreissägeblattes 6 dient. Das Messsystem 50 kann beispielsweise in Form eines induktiven Sensors ausgebildet sein.

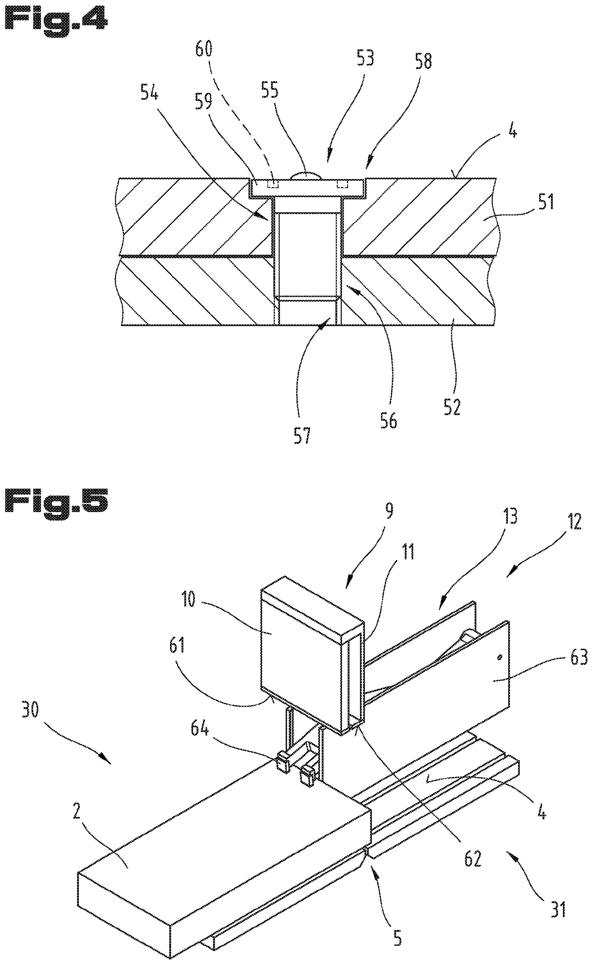

Fig. 4 zeigt eine Detailansicht der Werkstückauflage 4 in einer Schnittdarstellung. Wie aus Fig. 4 ersichtlich, kann vorgesehen sein, dass die Werkstückauflage 4 an einer Auflageplatte 51 ausgebildet ist, welche beispielsweise aus einem Kunststoffmaterial gefertigt werden kann, um eine weiche Oberfläche zu bilden, sodass das Werkstück 2 während dem Bearbeitungsvorgang nicht zerkratzt wird. Insbesondere kann vorgesehen sein, dass die Auflageplatte 51 an einer Auflageplattenaufnahme 52 angeordnet ist, welche am Maschinengrundgestell 3 angeordnet ist oder mit diesem gekoppelt ist. Somit kann die Auflageplatte 51 austauschbar an der Auflageplattenaufnahme 52 angeordnet sein. Weiters kann vorgesehen sein, dass eine Druckluftdüse 53 ausgebildet ist, welche in einer Durchgangsbohrung 54 der Auflageplatte 51 angeordnet ist. Über die Auflageplatte 51 verteilt können mehrere derartige Druckluftdüsen 53 angeordnet sein.

Die Druckluftdüsen 53 können jeweils eine Ventilkugel 55 aufweisen, welche mittels einer Feder gegen eine Dichtfläche gedrückt wird und somit im Ruhezustand die Druckluftdüse 53 verschließt. Erst bei Auflegen des Werkstückes 2 auf die Werkstückauflage 4 und somit Hinunterdrücken der Ventilkugel 55 entgegen der Federkraft, kann ein Luftstrom durch die Druckluftdüse 53 ermöglicht werden.

Weiters kann vorgesehen sein, dass die Druckluftdüsen 53 ein Gewinde 56 aufweisen und in der Auflageplattenaufnahme 52 ein Gegengewinde 57 ausgebildet ist, in welcher die Druckluftdüsen 53 einschraubbar sind. Der Durchmesser der Durchgangsbohrung 54 in der Auflageplatte 51 ist vorzugsweise so groß gewählt, dass die Druckluftdüse 53 frei in der Auflageplatte 51 aufgenommen werden kann.

Weiters kann vorgesehen sein, dass in der Auflageplatte 51 eine Senkung 58 ausgebildet ist, welche mit einem Absatz 59 an der Druckluftdüse 53 korrespondiert. Durch diese Ausgestaltung kann die Druckluftdüse 53 gleichzeitig zum Fixieren der Auflageplatte 51 an der Auflageplattenaufnahme 52 dienen. Weiters kann vorgesehen sein, dass in der Druckluftdüse 53 Einschraubausnehmungen 60 ausgebildet sind, welche zum Einschrauben der Druckluftdüse 53 in die Auflageplattenaufnahme 52 dienen.

Fig. 5 zeigt eine schematische Darstellung des Aufbaues der Niederhaltevorrichtung 9 und der Klemmvorrichtung 13 in einer perspektivischen Ansicht. Wie aus Fig. 5 ersichtlich, weist der erste Niederhaltebalken 10 eine erste Niederhaltefläche 61 auf und der zweite Niederhaltebalken 11 eine zweite Niederhaltefläche 62. Die Klemmvorrichtung 13 weist einen Klemmvorrichtungsrahmen 63 auf, an welchem obere Klemmfinger 64 und untere Klemmfinger 65 angeordnet sind. Die unteren Klemmfinger 65 sind in Fig. 5 nicht sichtbar. Das Werkstück 2 wird zum Positionieren zwischen den oberen Klemmfingern 64 und den unteren Klemmfingern 65 geklemmt.

In den Fig. 6 bis 11 ist der Verfahrensablauf zum Positionieren eines Werkstückes 2, welches einseitig eine nur sehr geringe Restgröße aufweist, dargestellt.

Wie aus Fig. 6 ersichtlich, wird in einem ersten Verfahrensschritt das Werkstück 2 mittels der Positioniervorrichtung 12, insbesondere den Klemmvorrichtungen 13 in seine gewünschte Position verschoben.

Optional kann an der Klemmvorrichtung 13 ein Erfassungsmittel 66 ausgebildet sein, welches zum Erfassen der korrekten Lage des Werkstückes 2 dient. Das Erfassungsmittel 66 kann beispielsweise in Form eines Lasersensors ausgebildet sein, welcher einen Abstand des Werkstückes 2 von einem Anschlag an der Klemmvorrichtung 13 erfassen kann.

In einem anschließenden Verfahrensschritt gemäß Fig. 7 kann der erste Niederhaltebalken 10 in Vertikalrichtung 67 nach unten verschoben werden um diesen an das Werkstück 2 anzunähern. Insbesondere kann hierbei vorgesehen sein, dass die erste Niederhalterfläche 61 in einem vordefinierten Abstand zum Werkstück 2 positioniert wird.

Anschließend werden, wie ebenfalls aus Fig. 7 ersichtlich, einzelne im ersten Niederhaltebalken 10 angeordnete Druckstifte 68 aus dem ersten Niederhalterbalken 10 herausgefahren, um diese am Werkstück 2 zur Anlage zu bringen und das Werkstück 2 somit grob zu fixeren. Die Druckstifte 68 sind in Bohrungen 69 im ersten Niederhalterbalken 10 angeordnet. Die Druckstifte 68 sind mittels eines Federelementes in eine Rückzugsposition 70 vorgespannt und werden mittels Druckluft in eine Vorschubposition 71 verschoben, in der sie am Werkstück 2 anliegen.

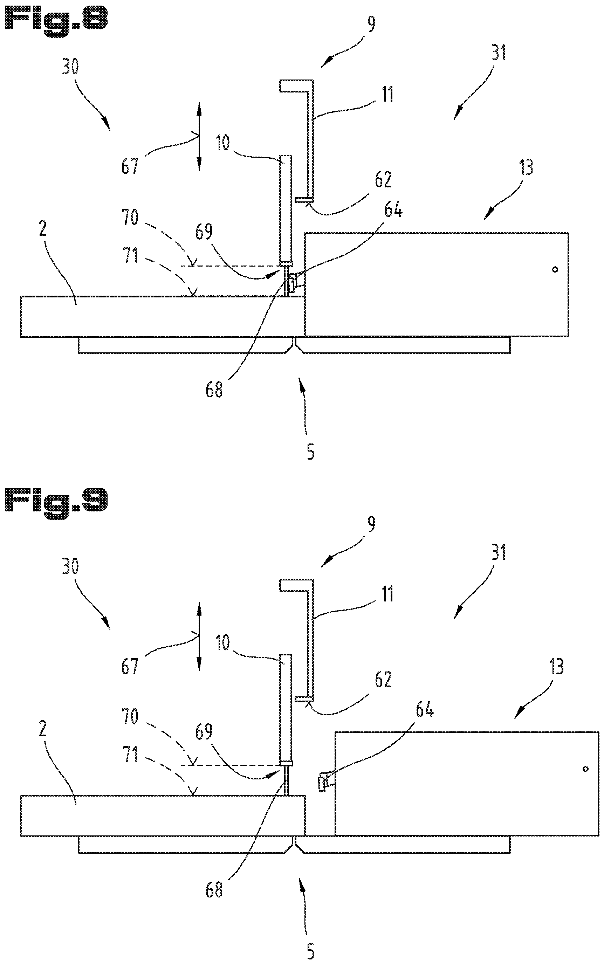

Wenn das Werkstück 2 mittels der Druckstifte 68 an der Werkstückauflage 4 fixiert ist, so kann, wie in Fig. 8 dargestellt, der obere Klemmfinger 64 vom Werkstück 2 abgehoben werden, sodass, wie in Fig. 9 dargestellt, die Klemmvorrichtung 13 vom Werkstück 2 entfernt werden kann. Alternativ dazu ist es auch denkbar, dass nur die Klemmkraft entfernt wird und der obere Klemmfinger 64 nicht komplett vom Werkstück 2 abgehoben wird.

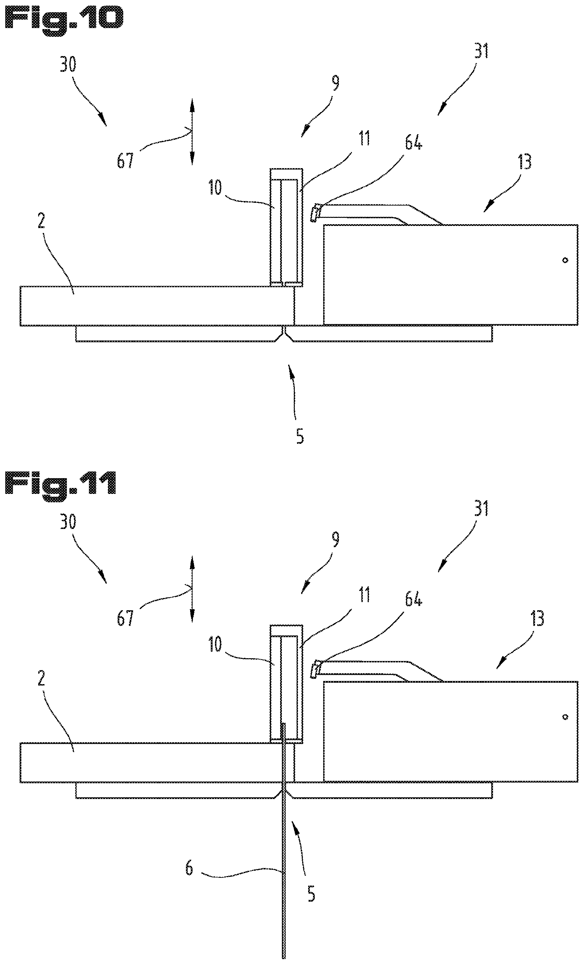

In einem anschließenden Verfahrensschritt kann, wie in Fig. 10 dargestellt, der zweite Niederhaltebalken 11 in Vertikalrichtung 67 zum Werkstück 2 bewegt werden, sodass die zweite Niederhaltefläche 62 an das Werkstück 2 angedrückt wird und dieses an der Werkstückauflage 4 fixiert wird.

Zeitgleich oder in einem anschließenden Verfahrensschritt kann der erste Niederhaltebalken 10 ebenfalls in Vertikalrichtung 67 zum Werkstück 2 bewegt werden, sodass die erste Niederhaltefläche 61 ebenfalls am Werkstück 2 zur Anlage gebracht wird. Bei diesem Verfahrensschritt können gleichzeitig die Druckstifte 68 in den ersten Niederhaltebalken 10 in die Rückzugsposition 70 eingefahren werden, wobei während dem Einfahren der Druckstifte 68 von diesen ein fortwährender Druck auf das Werkstück 2 aufgebracht werden kann.

Wie in Fig. 11 dargestellt, kann in einem anschließenden Verfahrensschritt mittels des Kreissägeblattes 6 das Werkstück 2 getrennt werden.

Fig. 12 zeigt die Klemmvorrichtung 13 in einer perspektivischen Ansicht, wobei ein Teil des Klemmvorrichtungsrahmens 63 ausgeblendet ist, um einen Einblick auf die innenliegenden Teile der Klemmvorrichtung 13 zu ermöglichen.

Im Ausführungsbeispiel nach Fig. 12, sind pro Klemmvorrichtung 13 jeweils zwei obere Klemmfinger 64 und zwei untere Klemmfinger 65 ausgebildet. Die beiden unteren Klemmfinger 65 sind jeweils direkt mit dem Klemmvorrichtungsrahmen 63 verschraubt und somit direkt mit diesem verbunden. Weiters ist ein Hebel 72 vorgesehen, welcher bezüglich einer ersten Schwenkachse 73 schwenkbar am Klemmvorrichtungsrahmen 63 gelagert ist. Die oberen Klemmfinger 64 sind von der ersten Schwenkachse 73 distanziert am Hebel 72 angeordnet.

Weiters ist ein Zug-/Druckmittel 74 ausgebildet, welches an einer zweiten Schwenkachse 75 mit dem Hebel 72 gekoppelt ist und an einer dritten Schwenkachse 76 mit einem zweiten Hebel 77 gekoppelt ist. Der zweite Hebel 77 ist hierbei mittels einer vierten Schwenkachse 78 schwenkbar am Klemmvorrichtungsrahmen 63 gelagert.

Die vierte Schwenkachse 78 des zweiten Hebels 77 ist zwischen einem ersten Längsende 79 und einem zweiten Längsende 80 des zweiten Hebels 77 angeordnet. Die dritte Schwenkachse 76 ist am zweiten Längsende 80 des zweiten Hebels 77 angeordnet. Mit dem ersten Längsende 79 des zweiten Hebels 77 ist ein Aktor 81 gekoppelt. Im vorliegenden Ausführungsbeispiel sind der Hebel 72 und der zweite Hebel 77 mittels dem Zug-/Druckmittel 74 derart miteinander gekoppelt, dass beim Ausfahren des Aktors 81 der Hebel 72 derart geschwenkt wird, dass die oberen Klemmfinger 64 in Richtung zu den unteren Klemmfingern 65 bewegt werden und somit das Werkstück 2 geklemmt werden kann.

Fig. 13 zeigt eine schematische Darstellung einer Kreissägeblattschmiervorrichtung 82. Die Kreissägeblattschmiervorrichtung 82 weist einen Düsenhalter 83 auf, in dem ein Schlitz 84 ausgebildet ist. Der Schlitz 84 ist derart ausgebildet, dass das Kreissägeblatt 6 im Schlitz 84 aufgenommen werden kann. Der Schlitz 84 ist insbesondere so groß dimensioniert, dass das Kreissägeblatt 6 frei im Schlitz 84 bewegt werden kann.

Der Schlitz 84 weist eine erste Seitenwand 85, eine zweite Seitenwand 86 und eine Rückwand 87 auf. Die erste Seitenwand 85 ist der ersten Sägeblattoberfläche 45 zugewandt. Die zweite Seitenwand 86 ist der zweiten Sägeblattoberfläche 46 zugewandt. Die Rückwand 87 ist der Umfangsfläche 47 zugewandt.

In der ersten Seitenwand 85 ist eine erste Schmiermitteldüse 88 angeordnet. In der zweiten Seitenwand 86 ist eine zweite Schmiermitteldüse 89 angeordnet. In der Rückwand 87 ist eine dritte Schmiermitteldüse 90 angeordnet.

Insbesondere kann vorgesehen sein, dass die erste Schmiermitteldüse 88 und die zweite Schmiermitteldüse 89 einander symmetrisch gegenüberliegend ausgebildet sind. Weiters kann vorgesehen sein, dass die erste Schmiermitteldüse 88 und die zweite Schmiermitteldüse 89 in einem Winkel 91 zur jeweils zugewandten Sägeblattoberfläche 45, 46 angeordnet sind. Alternativ dazu kann die erste Schmiermitteldüse 88 in Radialrichtung des Kreissägeblattes zur zweiten Schmiermitteldüse 89 versetzt angeordnet sein.

Der Winkel 91 ist so bemessen, dass die Schmiermitteldüsen 88, 89 eine Sprührichtung aufweisen, welche der Drehachse 39 zugewandt ist. Insbesondere kann vorgesehen sein, dass der Winkel (91) zwischen 15° und 85° beträgt.

Die dritte Schmiermitteldüse 90 ist derart im Düsenhalter 83 angeordnet, dass sie zum Besprühen der Umfangsfläche 47 des Kreissägeblattes 6 mit Schmiermittel dient. Insbesondere kann vorgesehen sein, dass die dritte Schmiermitteldüse 90 in einem Winkel von 90° zur Umfangsfläche 47 des Kreissägeblattes 6 angeordnet ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Plattensäge | 31 | zweite Seite Sägeschlitz |
| 2 | Werkstück | 32 | Schwenkstellung |
| 3 | Maschinengrundgestell | 33 | Fixierstellung |
| 4 | Werkstückauflage | 34 | Sägestellung |
| 5 | Sägeschlitz | 35 | Sägeaggregatsrahmen |
| 6 | Kreissägeblatt | 36 | Schwinge |
| 7 | Sägeaggregat | 37 | Schwenkachse Schwinge |
| 8 | Sägerichtung | 38 | Abstand A |
| 9 | Niederhaltevorrichtung | 39 | Drehachse |
| 10 | erster Niederhaltebalken | 40 | erste Klemmfläche |
| 11 | zweiter Niederhaltebalken | 41 | zweite Klemmfläche |
| 12 | Positioniervorrichtung | 42 | erste Gegenklemmfläche |
| 13 | Klemmvorrichtung | 43 | zweite Gegenklemmfläche |
| 14 | Positionierschlitten | 44 | Stellmittel |
| 15 | erste Linearführung | 45 | erste Sägeblattoberfläche |
| 16 | zweite Linearführung | 46 | zweite Sägeblattoberfläche |
| 17 | Positionierrichtung | 47 | Umfangsfläche |
| 18 | erster Antriebsmotor | 48 | Vibrationsdämpfungssystem |
| 19 | erstes Antriebssystem | 49 | Kraftaufbringungsvorrichtung |
| 20 | zweiter Antriebsmotor | 50 | Messsystem |
| 21 | zweites Antriebssystem | 51 | Auflageplatte |
| 22 | erstes Absolutmesssystem | 52 | Auflageplattenaufnahme |
| 23 | zweites Absolutmesssystem | 53 | Druckluftdüse |
| 24 | Ausrichtvorrichtung | 54 | Durchgangsbohrung |
| 25 | Absaugung | 55 | Ventilkugel |
| 26 | erster Ausrichtvorrichtungsteil | 56 | Gewinde |
| 27 | zweiter Ausrichtvorrichtungsteil | 57 | Gegengewinde |
| 28 | erster Anschlag | 58 | Senkung |
| 29 | zweiter Anschlag | 59 | Absatz |
| 30 | erste Seite Sägeschlitz | 60 | Einschraubausnehmung |
| 61 | erste Niederhaltefläche | | |
| 62 | zweite Niederhaltefläche | | |
| 63 | Klemmvorrichtungsrahmen | | |
| 64 | oberer Klemmfinger | | |
| 65 | unterer Klemmfinger | | |
| 66 | Erfassungsmittel Klemmvorrichtung | | |
| 67 | Vertikalrichtung | | |
| 68 | Druckstift | | |
| 69 | Bohrung für Druckstift | | |
| 70 | Rückzugsposition | | |
| 71 | Vorschubposition | | |
| 72 | Hebel | | |
| 73 | erste Schwenkachse | | |
| 74 | Zug-/Druckmittel | | |
| 75 | zweite Schwenkachse | | |
| 76 | dritte Schwenkachse | | |
| 77 | zweiter Hebel | | |
| 78 | vierte Schwenkachse | | |
| 79 | erstes Längsende zweiter Hebel | | |
| 80 | zweites Längsende zweiter Hebel | | |
| 81 | Aktor | | |
| 82 | Kreissägeblattschmiervorrichtung | | |
| 83 | Düsenhalter | | |
| 84 | Schlitz | | |
| 85 | erste Seitenwand | | |
| 86 | zweite Seitenwand | | |
| 87 | Rückwand | | |
| 88 | erste Schmiermitteldüse | | |
| 89 | zweite Schmiermitteldüse | | |
| 90 | dritte Schmiermitteldüse | | |
| 91 | Winkel | | |

## Patentansprüche

1. Plattensäge (1) zum Trennen von Werkstücken (2) in mehrere Abschnitte, umfassend:
- ein Maschinengrundgestell (3);
- eine Werkstückauflage (4) mit einem Sägeschlitz (5);
- ein Sägeaggregat (7) welches unterhalb der Werkstückauflage (4) angeordnet ist, wobei am Sägeaggregat (7) ein Kreissägeblatt (6) angeordnet ist, welches in einer Sägestellung (34) durch den Sägeschlitz (5) hindurchragt und in Sägerichtung (8) verschiebbar ist;
- eine Niederhaltevorrichtung (9) zum Klemmen des Werkstückes (2) an der Werkstückauflage (4);
- eine Positioniervorrichtung (12) zum Positionieren des Werkstückes (2),
wobei die Niederhaltevorrichtung (9) zumindest einen ersten Niederhaltebalken (10) mit einer ersten Niederhaltefläche (61) und einen zweiten Niederhaltebalken (11) mit einer zweite Niederhaltefläche (62) aufweist, wobei im ersten Niederhaltebalken (10) Druckstifte (68) angeordnet sind, welche relativ zur ersten Niederhaltefläche (61) verschiebbar sind, **dadurch gekennzeichnet, dass** die Druckstifte (68) in Bohrungen (69) der ersten Niederhaltefläche (61) angeordnet sind und mittels eines Federelements in ihre Rückzugsposition (70) vorgespannt sind und dass die Druckstifte (68) mittels Druckluft aus ihrer Rückzugsposition (70) in eine Vorschubposition (71) verschiebbar sind.

2. Plattensäge (1) nach Anspruch 1, **dadurch gekennzeichnet, dass** der erste Niederhaltebalken (10) an einer ersten Seite (30) des Sägeschlitzes (5) angeordnet ist und der zweite Niederhaltebalken (11) an einer zweiten Seite (31) des Sägeschlitzes (5) angeordnet ist und wobei die beiden Niederhaltebalken (10, 11) unabhängig voneinander in Vertikalrichtung (67) verschiebbar sind.

3. Plattensäge (1) nach einem der vorhergehenden Ansprüche, **dadurch gekennzeichnet, dass** die Werkstückauflage (4) an einer Auflageplatte (51) ausgebildet ist, welche an einer Auflageplattenaufnahme (52) aufliegt, wobei die Auflageplatte (51) Druckluftdüsen (53) durchragen, wobei die Druckluftdüsen (53) ein Gewinde (56) aufweisen und in der Auflageplattenaufnahme (52) ein Gegengewinde (57) ausgebildet ist und wobei die Auflageplatte (51) mittels der Druckluftdüsen (53) an der Auflageplattenaufnahme (52) fixiert ist.

4. Plattensäge (1) nach Anspruch 3, **dadurch gekennzeichnet, dass** die Auflageplatte (51) Durchgangsbohrungen (54) zur Aufnahme der Druckluftdüsen (53) aufweist und dass in den Durchgangsbohrungen (54) Senkungen (58) ausgebildet sind, wobei die Druckluftdüsen (53) einen Absatz (59) aufweisen, welcher mit den Senkungen (58) korrespondiert, sodass die Druckluftdüsen (53) versenkt in der Auflageplatte (51) aufgenommen ist und mittels des Absatzes (59) der Druckluftdüsen (53) eine Fixierkraft auf die Auflageplatte (51) aufbringbar ist.

5. Plattensäge (1) nach einem der vorhergehenden Ansprüche, **dadurch gekennzeichnet, dass** eine Ausrichtvorrichtung (24) ausgebildet ist, wobei die Ausrichtvorrichtung (24) in Sägerichtung (8) verschiebbar ist.

6. Plattensäge (1) nach Anspruch 5, **dadurch gekennzeichnet, dass** zumindest Teile der Ausrichtvorrichtung (24) in Sägerichtung (8) teleskopierbar sind.

7. Plattensäge (1) nach Anspruch 5 oder 6, **dadurch gekennzeichnet, dass** in der Ausrichtvorrichtung (24) eine Absaugung (25) angeordnet ist.

8. Plattensäge (1) nach einem der Ansprüche 5 bis 7, **dadurch gekennzeichnet, dass** an einer Stirnseite der Ausrichtvorrichtung (24) ein Anschlag (28, 29) angeordnet ist.

9. Plattensäge (1) nach einem der Ansprüche 5 bis 8, **dadurch gekennzeichnet, dass** die Ausrichtvorrichtung (24) geteilt ist und an der ersten Seite (30) des Sägeschlitzes (5) ein erster Ausrichtvorrichtungsteil (26) angeordnet ist und an der zweiten Seite (31) des Sägeschlitzes (5) ein zweiter Ausrichtvorrichtungsteil (27) angeordnet ist.

10. Plattensäge (1) nach einem der vorhergehenden Ansprüche, **dadurch gekennzeichnet, dass** eine Kreissägeblattschmiervorrichtung (82) ausgebildet ist, welche einen Düsenhalter (83) aufweist, der einen Schlitz (84) zur Aufnahme des Kreissägeblattes (6) aufweist, wobei in einer ersten Seitenwand (85) des Schlitzes (84) eine erste Schmiermitteldüse (88) angeordnet ist und in einer zweiten Seitenwand (86) des Schlitzes (84) eine zweite Schmiermitteldüse (89) angeordnet ist.

11. Plattensäge (1) nach einem der vorhergehenden Ansprüche, **dadurch gekennzeichnet, dass** im Bereich der Niederhaltevorrichtung (9) eine Lichtleiste, insbesondere eine LED-Leiste angeordnet ist.

12. Verfahren zum Betreiben einer Plattensäge (1) nach Anspruch 1, wobei zum Trennen eines Endabschnittes des Werkstückes (2) folgende Verfahrensschritte durchgeführt werden:
- Auflegen des Werkstückes (2) an der Werkstückauflage (4);
- Positionieren des Werkstückes (2) mittels der Positioniervorrichtung (12);
- Niederfahren des ersten Niederhaltebalkens (10), wobei in den Bohrungen (69) der ersten Niederhaltefläche (61) des ersten Niederhaltebalkens (10) die Druckstifte (68) angeordnet sind;
- Ausfahren der Druckstifte (68) aus der ersten Niederhaltefläche (61) des ersten Niederhaltebalkens (10) mittels Druckluft aus der Rückzugsposition (70) in die Vorschubposition (71), bis die Druckstifte (68) das Werkstück (2) an die Werkstückauflage (4) andrücken, wobei die Druckstifte (68) mittels des Federelements in ihre Rückzugsposition (70) vorgespannt sind;
- Öffnen von oberen Klemmfingern (64) einer Klemmvorrichtung (13) der Positioniervorrichtung (12);
- Entfernen der Positioniervorrichtung (12) vom Werkstück (2);
- Niederfahren des ersten Niederhaltebalkens (10) und eines zweiten Niederhaltebalkens (11) bis die erste Niederhaltefläche (61) des ersten Niederhaltebalkens (10) und eine zweite Niederhaltefläche (62) des zweiten Niederhaltebalkens (11) am Werkstück (2) anliegt;
- Trennen des Werkstückes (2) mittels des Kreissägeblattes (6) durch verschieben des Sägeaggregates (7) in Sägerichtung (8).

13. Verfahren nach Anspruch 12, **dadurch gekennzeichnet, dass** zum Trennen eines Anfangsabschnittes des Werkstückes (2) folgende Verfahrensschritte durchgeführt werden:
- Positionieren des Werkstückes (2) mittels der Positioniervorrichtung (12);
- Verschieben des ersten Ausrichtvorrichtungsteils (26) und des zweiten Ausrichtvorrichtungsteils (27) zum Werkstück (2), bis der zweite Anschlag (29) des zweiten Ausrichtvorrichtungsteils (27) am Werkstück (2) anliegt;
- Niederfahren des ersten Niederhaltebalkens (10) und des zweiten Niederhaltebalkens (11) bis die erste Niederhaltefläche (61) des ersten Niederhaltebalkens (10) und die zweite Niederhaltefläche (62) des zweiten Niederhaltebalkens (11) am Werkstück (2) anliegt;
- Trennen des Werkstückes (2) mittels des Kreissägeblattes (6) durch Verschieben des Sägeaggregates (7) in Sägerichtung (8) und dabei gleichzeitig verschieben des ersten Ausrichtvorrichtungsteils (26) mit dem Sägeaggregat (7).

14. Verfahren nach einem der Ansprüche 12 bis 13, **dadurch gekennzeichnet, dass** beim Trennen des Werkstückes (2) mittels des Kreissägeblattes (6) mittels eines Messsystems (50) die Schwingungsamplitude des Kreissägeblattes (6) in Axialrichtung erfasst wird und dass am Sägeaggregat (7) ein Vibrationsdämpfungssystem (48) ausgebildet ist, welches eine Kraftaufbringungsvorrichtung (49) zur berührungslosen Kraftaufbringung auf das Kreissägeblatt (6) aufweist, wobei mittels der Kraftaufbringungsvorrichtung (49) derart Kraftstöße auf das Kreissägeblatt (6) aufgebracht werden, dass der Schwingungsamplitude des Kreissägeblattes (6) entgegengewirkt wird.

15. Verfahren nach einem der Ansprüche 12 bis 14, **dadurch gekennzeichnet, dass** die Positioniervorrichtung (12) einen Positionierschlitten (14) umfasst, an welchem mehrere der Klemmvorrichtungen (13) angeordnet sind, wobei der Positionierschlitten (14) an einer ersten Linearführung (15) und an einer zweiten Linearführung (16) verschiebbar am Maschinengrundgestell (3) gelagert ist, wobei im Bereich der ersten Linearführung (15) ein erster Antriebsmotor (18) mit einem ersten Antriebssystem (19) gekoppelt ist und im Bereich der zweiten Linearführung (16) ein zweiter Antriebsmotor (20) mit einem zweiten Antriebssystem (21) gekoppelt ist, wobei im Bereich der ersten Linearführung (15) ein erstes Absolutmesssystem (22) ausgebildet ist, welches zum Liefern einer Lageinformation an den ersten Antriebsmotor (18) dient, und im Bereich der zweiten Linearführung (16) ein zweites Absolutmesssystem (23) ausgebildet ist, welches zum Liefern einer Lageinformation an den zweiten Antriebsmotor (20) dient, wobei beim Positionieren des Werkstückes (2) mittels der Positioniervorrichtung (12) der erste Antriebsmotor (18) und der zweite Antriebsmotor (20) synchron betrieben werden, wobei als Regelgröße der Erfassungswert des ersten Absolutmesssystems (22) und des zweiten Absolutmesssystems (23) in die Steuerung einfließt.

## Claims

1. A panel saw (1) for cutting workpieces (2) into multiple sections, comprising:
- a machine base frame (3);
- a workpiece support (4) with a sawing slot (5);
- a saw aggregate (7), which is arranged below the workpiece support (4), wherein a circular saw blade (6) is arranged on the saw aggregate (7), which circular saw blade (6) in a sawing position (34) protrudes through the sawing slot (5) and is displaceable in a sawing direction (8);
- a holding-down device (9) for clamping the workpiece (2) on the workpiece support (4);
- a positioning device (12) for positioning the workpiece (2),
wherein the holding-down device (9) has at least one first holding-down beam (10) with a first holding-down surface (61) and a second holding-down beam (11) with a second holding-down surface (62), wherein pressure pins (68) are arranged in the first holding-down beam (10), which are displaceable relative to the first holding-down surface (61), **characterized in that** the pressure pins (68) are arranged in bores (69) of the first holding-down surface (61) and are preloaded in their retracted position (70) by means of a spring element, and that the pressure pins (68) are displaceable out of their retracted position (70) and into an advance position (71) by means of compressed air.

2. The panel saw (1) according to claim 1, **characterized in that** the first holding-down beam (10) is arranged on a first side (30) of the sawing slot (5) and the second holding-down beam (11) is arranged on a second side (31) of the sawing slot (5), and wherein the two holding-down beams (10, 11) are displaceable independently of one another in the vertical direction (67).

3. The panel saw (1) according to one of the preceding claims, **characterized in that** the workpiece support (4) is formed on a support plate (51), which rests on a support plate holder (52), wherein compressed air nozzles (53) protrude through the support plate (51), wherein the compressed air nozzles (53) have a thread (56) and a mating thread (57) is formed in the support plate holder (52), and wherein the support plate (51) is affixed to the support plate holder (52) by means of the compressed air nozzles (53).

4. The panel saw (1) according to claim 3, **characterized in that** the support plate (51) has through-bores (54) for accommodating the compressed air nozzles (53), and that depressions (58) are formed in the through-bores (54), wherein the compressed air nozzles (53) have an offset (59), which corresponds to the depressions (58), so that the compressed air nozzles (53) are accommodated recessed in the support plate (51), and a fixing force can be applied to the support plate (51) by means of the offset (59) of the compressed air nozzles (53).

5. The panel saw (1) according to one of the preceding claims, **characterized in that** an alignment device (24) is formed, wherein the alignment device (24) is displaceable in the sawing direction (8).

6. The panel saw (1) according to claim 5, **characterized in that** at least parts of the alignment device (24) are telescopable in the sawing direction (8).

7. The panel saw (1) according to claim 5 or 6, **characterized in that** a suction (25) is arranged in the alignment device (24).

8. The panel saw (1) according to one of claims 5 to 7, **characterized in that** a stop (28, 29) is arranged on the front side of the alignment device (24).

9. The panel saw (1) according to one of claims 5 to 8, **characterized in that** the alignment device (24) is divided and a first alignment device part (26) is arranged on the first side (30) of the sawing slot (5) and a second alignment device part (27) is arranged on the second side (31) of the sawing slot (5).

10. The panel saw (1) according to one of the preceding claims, **characterized in that** a circular saw blade lubricating device (82) is formed, which has a nozzle holder (83) having a slot (84) for accommodating the circular saw blade (6), wherein a first lubricant nozzle (88) is arranged in a first lateral wall (85) of the slot (84) and a second lubricant nozzle (89) is arranged in a second lateral wall (86) of the slot (84).

11. The panel saw (1) according to one of the preceding claims, **characterized in that** a light strip, in particular an LED strip, is arranged in the region of the holding-down device (9).

12. A method for operating a panel saw (1) according to claim 1, wherein the following method steps are performed for cutting an end section of the workpiece (2):
- placing the workpiece (2) onto the workpiece support (4);
- positioning the workpiece (2) by means of the positioning device (12);
- lowering the first holding-down beam (10), wherein in the bores (69) of the first holding-down surface (61) of the first holding-down beam (10), the pressure pins (68) are arranged;
- moving the pressure pins (68) out of the first holding-down surface (61) of the first holding-down beam (10), out of the retracted position (70) and into the advance position (71) by means of compressed air, until the pressure pins (68) press the workpiece (2) onto the workpiece support (4), wherein the pressure pins (68) are preloaded in their retracted position (70) by means of a spring element;
- opening upper clamping fingers (64) of a clamping device (13) of the positioning device (12);
- removing the positioning device (12) from the workpiece (2);
- lowering the first holding-down beam (10) and the second holding-down beam (11) until the first holding-down surface (61) of the first holding-down beam (10) and a second holding-down surface (62) of the second holding-down beam (11) abut on the workpiece (2);
- cutting the workpiece (2) by means of the circular saw blade (6) by displacing the saw aggregate (7) in the sawing direction (8).

13. The method according to claim 12, **characterized in that** for cutting a start section of the workpiece (2), the following method steps are performed:
- positioning the workpiece (2) by means of the positioning device (12);
- displacing the first alignment device part (26) and the second alignment device part (27) toward the workpiece (2) until the second stop (29) of the second alignment device part (27) abuts on the workpiece (2);
- lowering the first holding-down beam (10) and the second holding-down beam (11) until the first holding-down surface (61) of the first holding-down beam (10) and the second holding-down surface (62) of the second holding-down beam (11) abut on the workpiece (2);
- cutting the workpiece (2) by means of the circular saw blade (6) by displacing the saw aggregate (7) in the sawing direction (8) while simultaneously displacing the first alignment device part (26) along with the saw aggregate (7).

14. The method according to one of claims 12 to 13, **characterized in that** when cutting the workpiece (2) by means of the circular saw blade (6), the vibration amplitude of the circular saw blade (6) in the axial direction is detected by a measuring system (50), and that a vibration damping system (48) is formed on the saw aggregate (7), which vibration damping system (48) has a force application device (49) for applying force to the circular saw blade (6) in a contactless manner, wherein the circular saw blade (6) is subjected to force impacts by the force application device (49), such that the vibration amplitude of the circular saw blade (6) is counteracted.

15. The method according to one of claims 12 to 14, **characterized in that** the positioning device (12) comprises a positioning carriage (14), on which multiple of the clamping devices (13) are arranged, wherein the positioning carriage (14) is mounted on the machine base frame (3) so as to be displaceable on a first linear guide (15) and on a second linear guide (16), wherein a first drive motor (18) is coupled to a first drive system (19) in the region of the first linear guide (15), and a second drive motor (20) is coupled to a second drive system (21) in the region of the second linear guide (16), wherein a first absolute measuring system (22) is formed in the region of the first linear guide (15), which first absolute measuring system (22) serves to provide position information to the first drive motor (18), and a second absolute measuring system (23) is formed in the region of the second linear guide (16), which second absolute measuring system (23) serves to provide position information to the second drive motor (20), wherein when positioning the workpiece (2) by means of the positioning device (12), the first drive motor (18) and the second drive motor (20) are operated synchronously, wherein the detection value of the first absolute measuring system (22) and of the second absolute measuring system (23) flows into the control as a control variable.

## Revendications

1. Scie à panneaux (1) pour le sectionnement de pièces (2) en plusieurs portions, comprenant :
- un bâti de base de machine (3) ;
- un support de pièce (4) avec une fente de sciage (5) ;
- un agrégat de scie (7) qui est disposé en dessous du support de pièce (4), dans lequel, sur l'agrégat de scie (7), est disposée une lame de scie circulaire (6), qui dépasse, dans une position de scie (34), à travers la fente de sciage (5) et est coulissante dans la direction de sciage (8) ;
- un dispositif de maintien (9) pour le blocage de la pièce (2) sur le support de pièce (4) ;
- un dispositif de positionnement (12) pour le positionnement de la pièce (2),
dans lequel le dispositif de maintien (9) comprend au moins une première barre de maintien (10) avec une première surface de maintien (61) et une deuxième barre de maintien (11) avec une deuxième surface de maintien (62), dans lequel, dans la première barre de maintien (10), sont disposées des tiges de pression (68), qui coulissent par rapport à la première surface de maintien (61), **caractérisé en ce que** les tiges de pression (68) sont disposées dans des alésages (69) de la première surface de maintien (61) et sont précontraintes au moyen d'un élément de ressort dans sa position de retrait (70) et **en ce que** les tiges de pression (68) peuvent coulisser à l'aide d'air comprimé de leur position de retrait (70) vers une position d'avance (71).

2. Scie à panneaux (1) selon la revendication 1, **caractérisée en ce que** la première barre de maintien (10) est disposée sur un premier côté (30) de la fente de sciage (5) et la deuxième barre de maintien (11) est disposée sur un deuxième côté (31) de la fente de sciage (5) et dans lequel les deux barres de maintien (10, 11) peuvent coulisser indépendamment entre eux dans la direction verticale (67).

3. Scie à panneaux (1) selon l'une des revendications précédentes, **caractérisée en ce que** le support de pièce (4) est réalisé sur une plaque de support (51), qui repose sur un logement de plaque de support (52), dans laquelle des buses à air comprimé (53) traversent la plaque de support (51), dans laquelle les buses à air comprimé (53) comprennent un filetage (56) et, dans le logement de plaque de support (52) est réalisé un contre-filetage (57) et dans laquelle la plaque de support (51) est fixée au moyen des buses à air comprimé (53) sur le logement de plaque de support (52).

4. Scie à panneaux (1) selon la revendication 3, **caractérisée en ce que** la plaque de support (51) comprend des alésages traversants (54) pour le logement des buses à air comprimé (53) et **en ce que**, dans les alésages traversants (54) sont réalisés des fraisages (58), dans laquelle les buses à air comprimé (53) présentent un épaulement (59), qui correspond avec les fraisages (58), de façon à ce que les buses à air comprimé (53) soient logées de manière noyée dans la plaque de support (51) et à ce qu'une force de fixation puisse être exercée sur la plaque de support (51) au moyen de l'épaulement (59) des buses à air comprimé (53).

5. Scie à panneaux (1) selon l'une des revendications précédentes, **caractérisée en ce qu'**un dispositif d'orientation (24) est formé, dans laquelle le dispositif d'orientation (24) peut coulisser dans la direction de sciage (8).

6. Scie à panneaux (1) selon la revendication 5, **caractérisée en ce qu'**au moins des parties du dispositif d'orientation (24) sont mobiles de manière télescopique dans la direction du sciage (8).

7. Scie à panneaux (1) selon la revendication 5 ou 6, **caractérisée en ce que**, dans le dispositif d'orientation (24), est disposé une aspiration (25).

8. Scie à panneaux (1) selon l'une des revendications 5 à 7, **caractérisée en ce que**, au niveau d'une face frontale du dispositif d'orientation (24) est disposée une butée (28, 29).

9. Scie à panneaux (1) selon l'une des revendications 5 à 8, **caractérisée en ce que** le dispositif d'orientation (24) est divisé et, sur le premier côté (30) de la fente de sciage (5), est disposée une première partie de dispositif d'orientation (26) et, sur le deuxième côté (31) de la fente de sciage (5), est disposée une deuxième partie de dispositif d'orientation (27).

10. Scie à panneaux (1) selon l'une des revendications précédentes, **caractérisée en ce qu'**un dispositif de lubrification de lame de scie circulaire (82) est formé, qui comprend un support de buse (83), qui comprend une fente (84) pour le logement de la lame de scie circulaire (6), dans lequel, dans une première paroi latérale (85) de la fente (84), est disposée une première buse de lubrifiant (88) et, dans une deuxième paropi latérale (86) de la fente (84), est disposée une deuxième buses de lubrifiant (89).

11. Scie à panneaux (1) selon l'une des revendications précédentes, **caractérisée en ce que**, au niveau du dispositif de maintien (9), est disposée une barre lumineuse, plus particulièrement une barre de LED.

12. Procédé de fonctionnement d'une scie à panneaux (1) selon la revendication 1, dans lequel, pour le sectionnement d'une portion d'extrémité de la pièce (2), sont exécutées les étapes suivantes :
- pose de la pièce (2) sur le support de pièce (4) ;
- positionnement de la pièce (2) au moyen du dispositif de positionnement (12) ;
- abaissement de la première barre de maintien (10), dans lequel, dans les alésages (69) de la première surface de maintien (61) de la première barre de maintien (10), sont disposées les tiges de pression (68) ;
- sortie des tiges de pression (68) hors de la première surface de maintien (61) de la première barre de maintien (10) au moyen d'air comprimé de la position de retrait (70) vers la position d'avance (71), jusqu'à ce que les tiges de pression (68) compriment la pièce (2) contre le support de pièce (4), dans lequel les tiges de pression (68) sont précontraintes au moyen de l'élément de ressort vers leur position de retrait (70) ;
- ouverture de taquets de blocage supérieurs (64) d'un dispositif de blocage (13) du dispositif de positionnement (12) ;
- éloignement du dispositif de positionnement (12) de la pièce (2) ;
- abaissement de la première barre de maintien (10) et d'une deuxième barre de maintien (11) jusqu'à ce que la première surface de maintien (61) de la première barre de maintien (10) et une deuxième surface de maintien (62) de la deuxième barre de maintien (11) s'appuie contre la pièce (2) ;
- sectionnement de la pièce (2) au moyen de la lame de scie circulaire (6) par le déplacement de l'agrégat de sciage (7) dans la direction de sciage (8).

13. Procédé selon la revendication 12, **caractérisé en ce que**, pour le sectionnement d'une portion initiale de la pièce (2), les étapes suivantes sont exécutées :
- positionnement de la pièce (2) au moyen du dispositif de positionnement (12) ;
- coulissement de la première partie de dispositif d'orientation (26) et de la deuxième partie de dispositif d'orientation (27) par rapport à la pièce (2), jusqu'à ce que la deuxième butée (29) de la deuxième partie de dispositif d'orientation (27) s'appuie contre la pièce (2) ;
- abaissement de la première barre de maintien (10) et de la deuxième barre de maintien (11) jusqu'à ce que la première surface de maintien (61) de la première barre de maintien (10) et la deuxième surface de maintien (62) de la deuxième barre de maintien (11) s'appuie contre la pièce (2) ;
- sectionnement de la pièce (2) au moyen de la lame de scie circulaire (6) par le coulissement de l'agrégat de sciage (7) dans la direction sciage (8) et coulissement simultané de la première partie du dispositif d'orientation (26) avec l'agrégat de sciage (7).

14. Procédé selon l'une des revendications 12 à 13, **caractérisé en ce que**, lors du sectionnement de la pièce (2) au moyen de la lame de scie circulaire (6), au moyen d'un système de mesure (50), l'amplitude d'oscillation de la lame de scie circulaire (6) dans la direction axiale est mesurée et **en ce que**, sur l'agrégat de sciage (7), est réalisé un système d'amortissement des vibrations (48), qui comprend un dispositif d'application de force (49) pour l'application sans contact d'une force sur la lame de scie circulaire (6), dans lequel, au moyen du dispositif d'application de force (49), des à-coups sont appliqués sur la lame de scie circulaire (6) de façon à ce que l'amplitude d'oscillation de la lame de scie circulaire (6) soit contrecarrée.

15. Procédé selon l'une des revendications 12 à 14, **caractérisé en ce que** le dispositif de positionnement (12) comprend un chariot de positionnement (14) sur lequel sont disposés plusieurs des dispositifs de blocage (13), dans lequel le chariot de positionnement (14) est logé de manière coulissante sur un premier guidage linéaire (15) et sur un deuxième guidage linéaire (16) sur le bâti de base de la machine (3), dans lequel, au niveau du premier guidage linéaire (15), un premier moteur d'entraînement (18) est couplé avec un premier système d'entraînement (19) et, au niveau du deuxième guidage linéaire (16), un deuxième moteur d'entraînement (20) est couplé avec un deuxième système d'entraînement (21), dans lequel, au niveau du premier guidage linéaire (15), est réalisé un premier système de mesure absolue (22), qui permet de fournir une information de position au premier moteur d'entraînement (18) et, au niveau du deuxième guidage linéaire (16), est réalisé un deuxième système de mesure absolue (23) qui permet de fournir une information de position au deuxième moteur d'entraînement (20), dans lequel, lors du positionnement de la pièce (2) au moyen du dispositif de positionnement (12), le premier moteur d'entraînement (18) et le deuxième moteur d'entraînement (20) fonctionnent de manière synchrone, dans lequel, en tant que grandeur de régulation, la valeur de mesure du premier système de mesure absolue (22) et du deuxième système de mesure absolue (23) est entrée dans la commande.
